# EUROPÄISCHE PATENTSCHRIFT

(11) **EP 1 356 619 B1**
(45) Veröffentlichungstag und Bekanntmachung des Hinweises auf die Patenterteilung: **31.10.2007**
(21) Anmeldenummer: 02706622.4
(22) Anmeldetag: 23.01.2002
(51) Int. Cl.: H04J 14/02, H04B 10/00

(54) **VERFAHREN UND ELEKTRO-OPTISCHE SCHALTUNGSANORDNUNG ZUR LEITUNGSPROTEKTION IN EINER WDM-DATENÜNERTRAGUNGSSTRECKE**
METHOD AND ELECTRO-OPTICAL CIRCUIT ARRANGEMENT FOR LINE PROTECTION IN A WDM DATA TRANSMISSION LINK
PROCEDE ET CIRCUIT ELECTRO-OPTIQUE DESTINES A LA PROTECTION DE LIGNE DANS UN LIEN DE TRANSMISSION DE DONNEES WDM

(30) Priorität: 02.02.2001 DE 10104704
(43) Veröffentlichungstag der Anmeldung: 29.10.2003
(73) Patentinhaber: NOKIA SIEMENS NETWORKS GMBH & CO. KG, 81541 München (DE)
(72) Erfinder: MÜLLER, Horst, 82069 Hohenschäftlarn (DE)
(86) Internationale Anmeldenummer: PCT/DE2002/000222
(87) Internationale Veröffentlichungsnummer: WO 2002/061995

(56) Entgegenhaltungen:
- EP-A- 0 483 790
- EP-A- 0 644 704
- EP-A- 0 920 153
- EP-A- 0 938 244
- GB-A- 2 346 280
- US-A- 5 717 796

## Beschreibung

Die Erfindung betrifft eine Schaltungsanordnung zur Leitungsprotektion einer optischen Datenübertragung gemäß dem Oberbegriff des Patentanspruches 1.

Für die Übertragung von optischen Signalen, innerhalb der Synchronen Digital Hierarchie (SDH) entsprechend der europäischen Norm beziehungsweise innerhalb der Synchronous Optical Network (SONET) entsprechend der nordamerikanischen Norm, werden möglichst kostengünstige Übertragungsverfahren gesucht. Als Übertragungsmedium kommt aus Kostengründen insbesondere Glasfaser, wegen der großen Bandbreite und Reichweite infolge der geringen Dämpfung, zum Einsatz. Durch Mehrfachausnutzung der Glasfaser mit Wellenlängenmultiplex (WDM) wird versucht, diese optischen Verbindungen möglichst optimal zu nutzen. Zum Schutz der Übertragung bei eventuellen Ausfallen einer Strecke werden die Signale auf zwei Glasfasern auf getrennten Wegen (Working und Protection) geführt.

Aus der Patentanmeldung DE 19 731 494 der Anmelderin ist eine Schaltungsanordnung bekannt, bei der durch Mehrfachausnutzung der Glasfaser mittels Wellenlängenmnltiplex (WDM) der Schutz der Übertragung in Ringstrukturen gewährleistet werden kann.

In der entsprechenden Offenlegungsschrift DE 19 731 494 wird ein Verfahren zur Datenübertragung in einem bidirektionalen Working-Kanal zwischen mehreren Terminals eines optischen Ringnetzes mit einer Protection-Einrichtung beschrieben, die bei einer gestörten Datenübertragung eine Protection-Verbindung im Wellenlängenmultiplexverfahren in einem Working-Kanal über den ungestörten Abschnitt des Ringnetzes ermöglicht, wobei ein einziger einen vorgegebenen Wellenlängenbereich aufweisender bidirektionaler Protection-Kanal, der mindestens die Übertragungskapazität des Working-Kanals besitzt, alle Terminals miteinander verbindet, und bei einer Verbindungsstörung zwischen den einem gestörten Streckenabschnitt benachbarten Terminals über den ungestörten Abschnitt des Ringnetzes im Protection-Kanal eine Protection-Verbindung hergestellt wird, während die nicht betroffenen Terminals den Protection-Kanal durchschleifen. Konkret wird dies dadurch realisiert, daß bei einer Störung einer Working-Leitungsbaugruppe auf die zugeordnete Protection-Leitungsbaugruppe umgeschaltet wird, um weiterhin die Working-Verbindung aufrechtzuerhalten. Die Umschaltung erfolgt hierbei in den elektronischen Baugruppen.

Entsprechend ist auch eine Anordnung zur Datenübertragung zwischen mehreren Terminals in einem optischen Ringnetz mit einer Protection-Einrichtung offenbart, die im Störungsfall die Datenübertragung im Wellenlängenmultiplexverfahren über den ungestörten Abschnitt des Ringnetzes in einem Working-Kanal ermöglicht, mit Wellenlängen-Demultiplexern, über die wellenlängenindividuell Working-Signale und Protection-Signale ausgekoppelt werden, und Wellenlängen-Multiplexern, über die wellenlängenindividuell Working-Signale und Protection-Signale eingekoppelt werden, wobei ein einziger einen vorgegebenen Wellenlängenbereich aufweisender bidirektionaler Protektion-Kanal, der mindestens die Übertragungskapazität des Working-Kanals hat, vorgesehen ist, der alle Terminals miteinander verbindet.

Die hier verwendeten optischen Schalter zwischen Ausgängen der Wellenlängen-Demultiplexer und Eingängen der Wellenlängen-Multiplexer sowie von Leitungsbaugruppen, dienen lediglich dazu, bei einer ungestörten Verbindung den Protection-Kanal durchschleifen oder bei einem von der Störung betroffenen Terminal seine Anschaltung an den Protection-Kanal, zur Herstellung einer Protection-Verbindung über den ungestörten Abschnitt des Ringnetzes, herstellen zu können. Die eigentliche Umschaltung zwischen den beiden Datenübertragungskanälen erfolgt im elektronischen Teil des Netzelementes.

Das hierin beschriebene Verfahren ist als eine Anwendung in einem optischen Ringnetz vorgesehen und die zugehörige Schaltungsanordnung ist relativ aufwendig und daher kostenungünstig für eine reine "Punkt zu Punkt"-Verbindung.

In WO 00/28670 wird ein optischer Schalter zum Umschalten zwischen zwei Übertragungsleitungen bzw. zwei Kanalsignalen verwendet. Jedoch ist es hier notwendig, jeweils vor dem optischen Schalter für jeden Kanal der zwei Kanalsignale ein optisches Monitoring durchzuführen, durch welches der optische Schalter über die Kontrolleinheit gesteuert wird.

In EP 0 920 153 A2 ist eine Ausführungsform für eine Protection-Übertragung eines Ring-Netzwerks offenbart. Einem empfangseitigen Netzelement TO NE sind zwei optische Schalter SW 618, 619 jeweils mit einem Ausgangssignal λ3, λ4 vorgeschaltet. Die Eingangssignale der optischen Schalter SW 618, 619 entsprechen je einem "wellenlängen-identischen" Ausgangssignal (z. B. λ3) zweier, jeweils einer optischen Übertragungsleitung 101, 102 zugeordneter Demultiplexer DEMUX 700, 710, die aus dem über die optischen Leitungen 101, 102 übertragenen WDM-Signal vier Ausgangssignale.mit unterschiedlichen Wellenlängen λ1, λ2, λ3, λ4 bilden. Zur Durchschaltung eines von beiden Eingangssignalen an einem der optischen Schalter SW 618, 619 ist eine Monitoreinheit MONITOR vorgesehen, die mit Anteilen beider Eingangssignale gespeist und mittels eines Überwachungskanals λs entsprechend gesteuert wird.

Es ist daher Aufgabe der Erfindung, eine einfache Schaltungsanordnung anzugeben, wodurch möglichst kostengünstig eine Leitungsprotection bei einer "Punkt zu Punkt"-Verbindung erreicht wird.

Die Aufgabe wird durch die Merkmale des Patentanspruches 1 gelöst.

Entsprechend dem zugrundeliegenden Erfindungsgedanken schlägt der Erfinder vor, eine bekannte Schaltungsanordnung zur Leitungsprotektion einer optischen Datenübertragungsstrecke, die zwischen einer Senderseite und einer Empfangsseite mindestens zwei auswählbare optische Datenübertragungsleitungen aufweist, auf denen optische Signale über jeweils n Datenkanäle unterschiedlicher Frequenz übertragen werden, bei der senderseitig n Netzelemente zur Umwandlung elektronischer Datensignale in optische Signale vorgesehen sind und den jeweiligen Netzelementen pro optische Datenübertragungsleitung je ein Multiplexer nachgeschaltet ist und bei der empfangsseitig den jeweiligen optischen Datenübertragungsleitungen je ein Demultiplexer zugeordnet ist, deren jeweils einem der n Datenkanäle zugeordnete Ausgänge über jeweils eine optische Datenübertragungsleitung durchschaltende optische Schalter an den jeweiligen Eingang von n empfangsseitigen Netzelementen zur optisch/elektrischen Umwandlung geführt sind, dahingehend zu verbessern, dass das jeweils über einen der optischen Schalter durchgeschaltete Signal nach optisch/elektrischer Umwandlung im empfangsseitigen Netzelement einer diesem Netzelement zugeordneten Überwachungseinrichtung zur Ermittlung von Qualitäts- bzw. Leistungswerten zugeführt ist, und dass anhand der ermittelten Qualitäts- bzw. Leistungswerte eine Steuerung bzw. Umschaltung des optischen Schalters auf die jeweils qualitativ bessere optische Datenübertragungsleitung erfolgt.

Hierdurch wird erreicht, daß auf einen Teil der elektronischen Baugruppen der Netzelemente verzichtet und dadurch eine wesentliche Kostenreduktion erreicht.werden kann.

Eine vorteilhafte Ausgestaltung der Schaltungsanordnung kann darin bestehen, daß die zu übertragenden Signale jeweils auf der insgesamt qualitativ besseren der beiden Datenübertragungsleitungen geführt werden. Hierdurch wird ständig die bestmögliche Leitung gewählt, immer eine hohe Datenübertragungsrate erreicht und die Effizienz des Systems optimiert.

Vorteilhaft kann die Umschaltung der Übertragung auf die jeweils bessere Datenübertragungsleitung durch eine Monitorschaltung erfolgen, wobei dieser Monitorschaltung die Qualität der Datenübertragungsleitungen gemeldet wird.

Eine weitere funktionelle Verbesserung der Schaltungsanordnung kann darin liegen, die Datenübertragungsleitung mit schlechter Qualität oder Ausfall auch nach der Stillegung, vorzugsweise durch die Monitorschaltung, zu überwachen und im Falle einer Verbesserung der Qualität oder Wiederherstellung nach einer Störung wieder zur Datenübertragung zur Verfügung zu stellen. Hierdurch wird eine wesentliche Erleichterung bei der Wartung und Instandhaltung der Datenübertragungsleitungen erreicht, da keine manuellen Eingriffe nach der Behebung von Leitungsstörungen mehr notwendig werden. Um eine automatische Wiederinbetriebnahme ausgefallener Datenübertragungsleitungen zu ermöglichen, können von den n Netzelementen für n Kanäle n-1 Netzelemente und n-1 Kanäle für den Betrieb vorgesehen werden, und das n-te Netzelement und der n-te Kanal zur Überwachung einer ausgefallenen Datenübertragungsleitung dienen.

Als Datenleitungen können beispielsweise eine Glasfaser oder andere optische Leiter oder auch optische Richtstrecken ohne Trägermaterialien verwendet werden.

Vorteilhaft kann zur gleichzeitigen Umschaltung aller e-lektro-optischen Schalter eine Monitorschaltung vorgesehen werden, die zur individuellen Umschaltung der elektrooptischen Schalter je Datenübertragungsleitung dient.

Des weiteren können zur Überwachung der Qualität der Datenübertragung in den Netzelementen RST-Funktionen und/oder eine MSP-Funktionen und/oder Mittel zur Kontrolle eines Rahmensynchronismus und/oder Ermittlung der.Bitfehlerrate je Datenübertragungsleitung vorgesehen sein.

Eine weitere vorteilhafte Ausgestaltung der erfindungsgemäßen Schaltungsanordnung sieht eine Monitorschaltung vor, welche die Umschaltung der Übertragung auf die jeweils bessere Datenübertragungsleitung durch eine Monitorschaltung vornimmt, falls die Qualität einer Datenübertragungsleitung ein bestimmtes Maß unterschreitet.

In einer besonderen Ausgestaltung der erfindungsgemäßen Schaltungsanordnung können senderseitig als Verteiler entweder optische Splitter vorgesehen sein, welche die Datensignale unter einem Verlust von 3dB einfach aufsplitten, oder andererseits optische Schalter vorgesehen werden, welche entsprechend der Qualitätssituation der Datenübertragungsleitungen oder Datenübertragungskanäle gesteuert werden und die Datensignale ohne Verlust in die gewünschte Datenübertragungsleitung führen.

Außerdem kann zur Steuerung der senderseitigen optischen Schalter ein zusätzlicher Kommunikationsweg zwischen der Empfänger- und der Senderseite vorgesehen sein. Dieser Kommunikationsweg kann beispielsweise eine elektrische Verbindung zwischen Empfänger- und Senderseite darstellen, allerdings besteht auch die Möglichkeit hierzu einen freien oder nur teilweise genutzten optischen Kanal.zu verwenden.

Des weiteren können die senderseitigen optischen Schalter derart angesteuert sein, daß die empfangsseitige Stellung der Schalter gespiegelt wird. Somit wird eine Steuerung der senderseitigen optischen Schalter realisiert, die empfangsseitige Stellung der Schalter kopiert und deren Stellung aus gegenläufigen Datenübertragungsleitungen detektiert.
Vorteilhafte Weiterbildungen der Erfindung sind in den Unteransprüchen angegeben.

Zusätzliche Merkmale und Vorteile der Erfindung ergeben sich aus der nachfolgenden Beschreibung bevorzugter Ausführungsbeispiele unter Bezugnahme auf die Zeichnungen.

Die erfindungsgemäßen Schaltungsanordnungen sollen nachfolgend anhand der Zeichnungen näher erläutert werden. Es stellen dar:
- Figur 1:: Bekannte "Punkt zu Punkt"-Verbindung mit Leitungsprotection (Stand der Technik);
- Figur 2:: Einfache erfindungsgemäße Schaltungsanordnung mit optischen Splittern und optischen Schaltern;
- Figur 3:: Schaltungsanordnung entsprechend Figur 2, jedoch mit zusätzlichem Überwachungskanal;
- Figur 4:: Schaltungsanordnung entsprechend Figur 2, jedoch mit senderseitigen optischen Schaltern anstelle Splittern;
- Figur 5:: Schaltungsanordnung mit je einem senderseitigen und einem empfängerseitigen Monitor;
- Figur 6:: Detaildarstellung aus Figur 5 mit dargestellten Datenübertragungsstrecken in Rückrichtung;

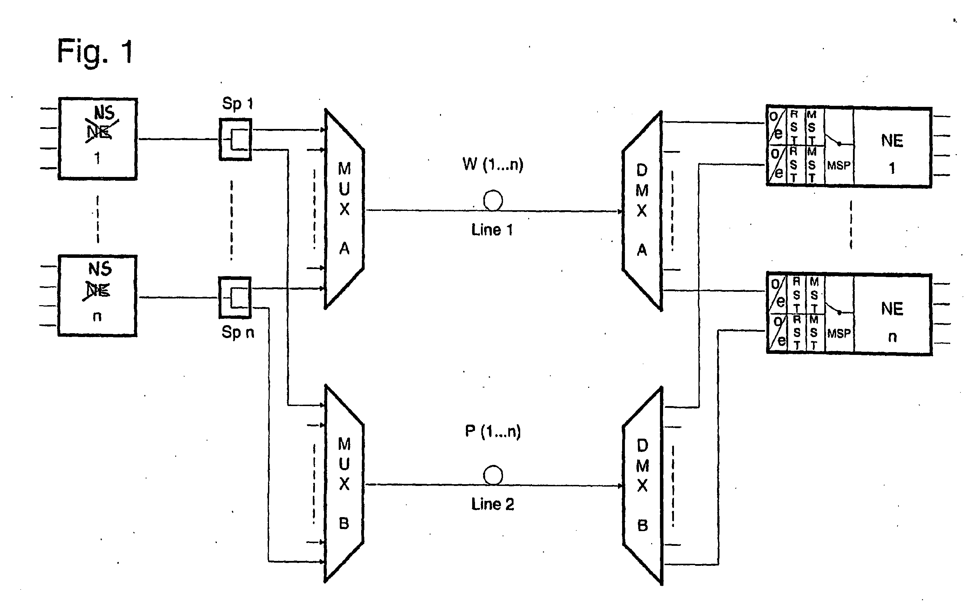

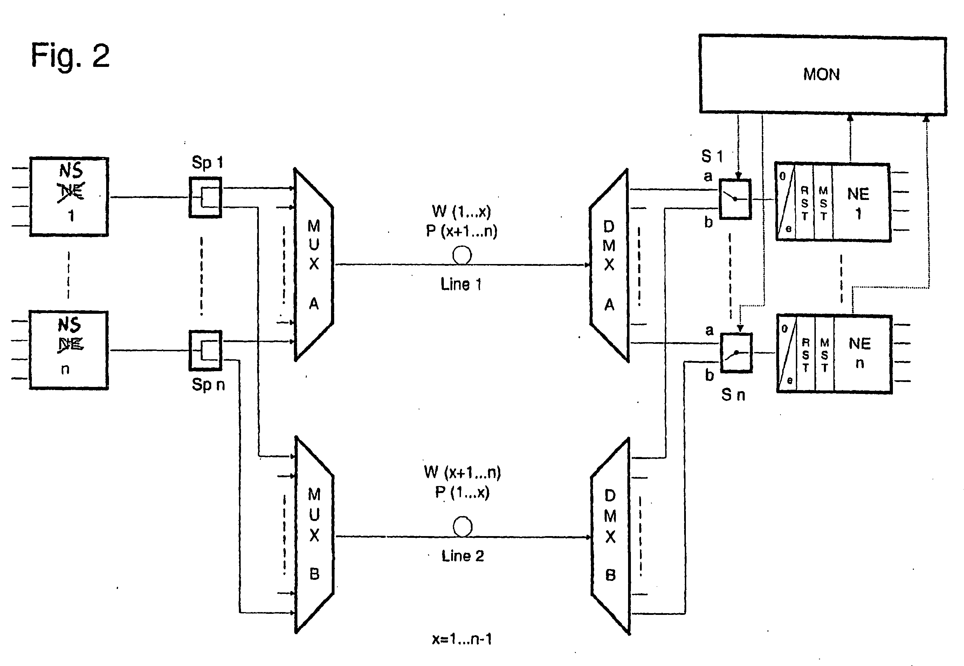

Die Figur 1 zeigt eine bekannte "Punkt zu Punkt" - Verbindung mit 2 Datenübertragungsleitungen Line 1 und Line 2. Aus Gründen der Übersichtlichkeit ist nur eine Übertragungsrichtung dargestellt, selbstverständlich liegen in entgegengesetzter Richtung nochmals die gezeigten Datenleitungen vor. Diese Rückrichtung ist, ebenso wie in den folgenden Figuren 2-5, hierzu analog aufgebaut.

Hier werden die optischen Ausgangssignale der n senderseitigen Netzelemente NS 1 ... NS n über optische Splitter Sp 1 ... Sp n den WDM-Multiplexern MUX A und MUX B zugeführt. Jedes der n Netzelemente NS 1 ... NS n sendet auf einer bestimmten Wellenlänge λᵢ. Es sind zwei WDM-Datenübertragungsstrecken Line 1 und Line 2 vorgesehen, wobei im Normalfall die Datenübertragungsstrecke Line 1 zur Working- und die Line 2 zur Protection-Strecke erklärt wird.

Auf der Empfängerseite spalten die WDM-Demultiplexer DMX A und DMX B die Leitungssignale in die Signale ihrer bestimmten Wellenlängen λᵢ auf und führen diese den n empfängerseitigen Netzelementen NE 1, ..., NE n zu. Jedes dieser empfängerseitigen Netzelemente weist zwei optische Eingangsschnittstellen o/e auf und wählt nach einer optisch/elektrischen Wandlung das qualitativ bessere der beiden Signale aus. Handelt es sich hierbei zum Beispiel um SDH-Signale nach der ITU-T Empfehlung G.707, so wird die Regenerator Section und die Multiplex Section in den Funktionsstufen RST und MST terminiert. Dabei wird u.a. der Rahmensynchronismus und die Bitfehlerrate sowie die Quelle/Zieladresse des ankommenden Signals überwacht. Die nachfolgende Multiplex Section Protection MSP wählt dann aufgrund dieser Überwachung das qualitativ bessere der beiden Signale, z. B. das mit der geringeren Bitfehlerrate, aus.

Die bekannte Anordnung hat den Nachteil, das sie relativ aufwendig ist, da die optischen Eingangsschaltungen und die Funktionen RST und MST in den Netzelementen NE 1 ... NE n doppelt vorzusehen sind.

Die Figur 2 zeigt die Schaltungsanordnung zur Durchführung des verbesserten erfindungsgemäßen Verfahrens, das diesen Aufwand der Doppelung der optischen Eingangsschaltungen vermeidet.

In dieser einfachen Ausführung weisen die Netzelemente NE 1 ... NE n empfangsseitig nur jeweils eine optische Schnittstelle und nur eine RST- und MST-Funktion auf. Den Netzelementen vorgeschaltet sind optische Schalter S 1 ... S n angeordnet. Werden nun x Schalter (x=1...n-1) in der Stellung a und die restlichen n-x Schalter in Stellung b betrieben, können beide Datenleitungen Line 1 und Line 2 hinreichend überwacht werden. Die Netzelemente NE 1 ...NE x überwachen mittels ihrer RST- und MST-Funktionen die Performance der Datenübertragungsleitung Line 1 und die Netzelemente NE (x+1) ... NE n die Performance der Datenübertragungsleitung Line 2.

Die Überwachung der beiden Datenübertragungsleitungen Line 1 und Line 2 durch Überwachungsfunktionen innerhalb der Netzelemente, zum Beispiel an Hand der Erkennung eines Ausfalls des Rahmensynchronismus oder mittels der Bitfehlerrate, ist zudem weit aussagekräftiger und kostengünstiger, als beispielsweise eine Überwachung mittels Sensoren am Eingang der Schalter SE. Sind zum Beispiel optische Verstärker (EDFA=Erbium dotierter Faserverstärker) in der Strecke eingesetzt, so kann durch das Rauschen der Verstärker das Vorhandensein eines optischen Signals vorgetäuscht werden, so das die Sensoren einen Signalausfall nicht detektieren können. Die Überwachung auf Ausfall des Rahmensynchronismus oder die Berechnung der Bitfehlerrate sind hier weit aussagekräftiger.

Die Qualitäts- beziehungsweise Leistungswerte der einzelnen Netzelemente NE 1 ... NE n werden an eine zentrale Monitorschaltung MON gemeldet, die damit einen Überblick über die Qualität der Datenübertragungsleitungen Line 1 und Line 2 hat. Es ist für die Überwachung der Datenübertragungsleitungen Line 1 und Line 2 sogar ausreichend, wenn aus jeder Gruppe der Netzelemente NE 1 ... NE x und NE (x+1) ... NE n jeweils ein Netzelement seine Qualitäts- beziehungsweise Leistungswerte an die zentrale Monitorschaltung MON meldet. Diese zentrale Kenntnis ist ein weiterer Vorteil des erfindungsgemäßen Verfahrens.

Fällt bei einer Störung zum Beispiel die Datenübertragungsleitung Line 1 aus, werden die Netzelemente NE 1 ... NE x dies aufgrund ihrer RST- und MST-Überwachungsfunktion feststellen und an die Monitorschaltung MON weitermelden. Ist die Datenübertragungsleitung Line 2 in Ordnung, was der Monitorschaltung MON durch die Information der Netzelemente NE (x+1) ... NE n bekannt ist, wird die Monitorschaltung die Schalter S 1 ... S x zum Umschalten in Stellung b und damit auf die intakte Datenleitung Line 2 veranlassen.

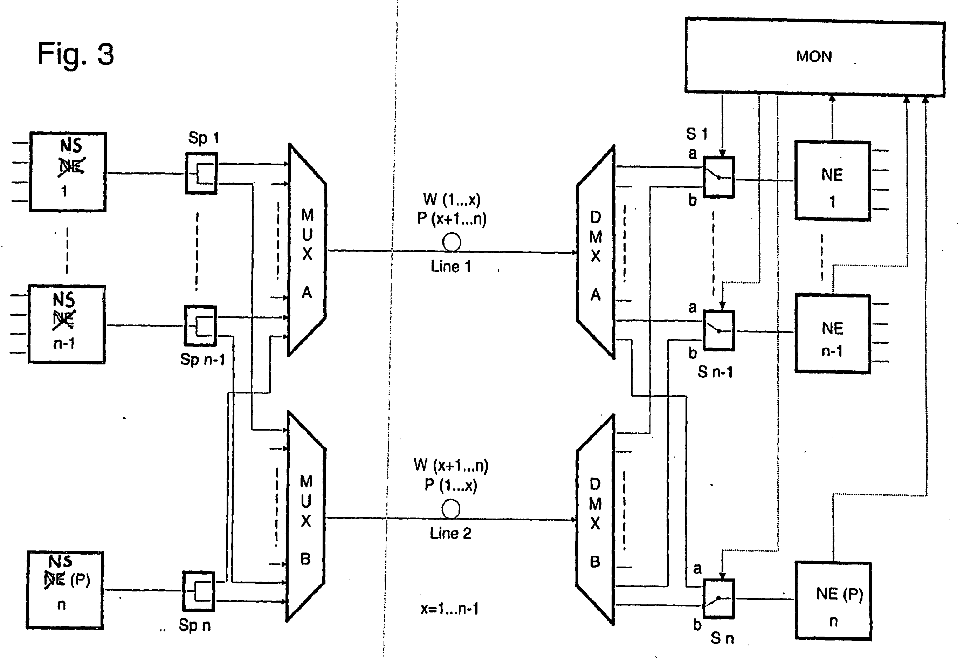

Vorteilhaft ist es nun, wenn auch nach einer Störung automatisch erkannt werden kann, ob die Datenübertragungsleitung Line 1 wieder in Ordnung ist, da nach der Störung sämtliche Schalter S 1 ... S n in Stellung b stehen. Dies kann durch eine Anordnung entsprechend Figur 3 erreicht werden.

In diesem Fall sind beidseits nur je (n-1) Netzelemente für die Übertragung von Nutzsignalen vorgesehen, und ein empfangsseitiges Netzelement NE (P) wird verwendet, um im Störungsfall prüfen zu können, ob die gestörte Datenübertragungsleitung wieder in Ordnung ist. Ist beispielsweise die Datenübertragungsleitung Line 2 gestört, so sind die Netzelemente NE 1 ... NE (n-1) über deren jeweilige Schalter in der Stellung a mit der Datenübertragungsleitung Line 1 verbunden. Das Netzelement NE (P) n ist über dessen Schalter S n in Stellung b mit der Datenübertragungsleitung Line 2 verbunden und kann so prüfen, wann diese wieder verfügbar ist.

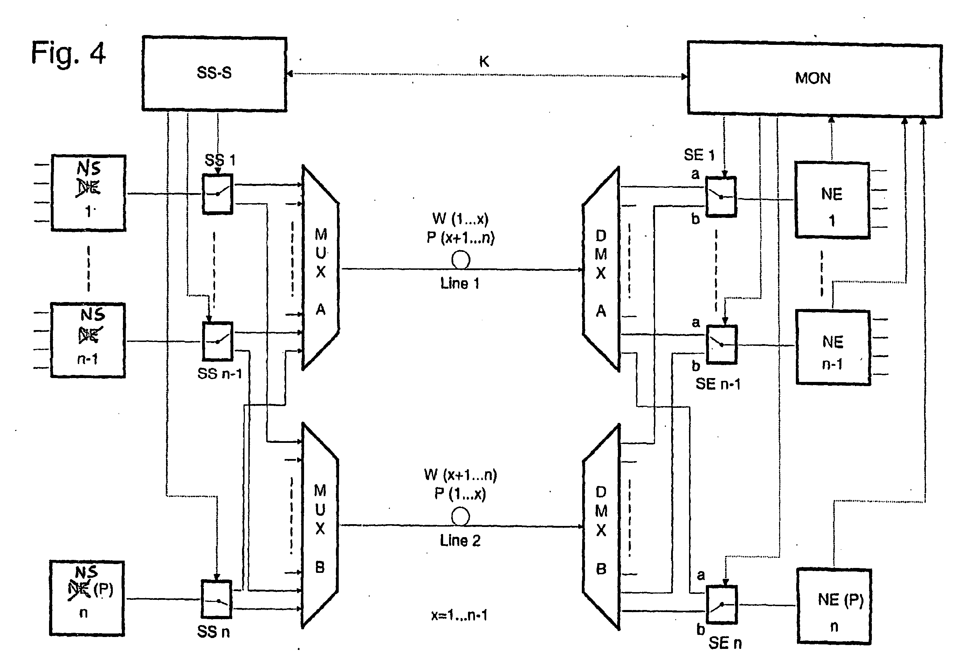

Eine weitere Ausführungsvariante ist in der Figur 4 dargestellt. Hier sind in Senderichtung anstelle der optischen Splitter optische Schalter SS 1 ....SS n eingesetzt. Dies hat den Vorteil, das die Durchgangsdämpfung der optischen Schalter geringer ist als die Dämpfung der.optischen Splitter, die 3 dB beträgt. Dadurch läßt sich eine größere Reichweite der WDM-Strecke erreichen. Hierzu ist jedoch eine Kommunikation zwischen der Monitorschaltung und einer Steuerung der optischen Schalter SS 1 ... SS n erforderlich. Die Monitorschaltung wirkt hierbei als Master und die Steuerung als Slave. Dies bedeutet, das die Monitorschaltung MON der Steuerung SS-S über den Kommunikationsweg K mitteilt, in welcher Richtung die einzelnen Schalter SE 1 ... SE n stehen. Die Steuerung schaltet daraufhin die Schalter SS 1 ... SS n in die gleiche Richtung, so daß die Übertragung über die richtige WDM-Strecke gewährleistet ist.

Auch hier kann ein Netzelement NE p dazu vorgesehen werden, um im Fall einer Störung einer WDM-Strecke die gestörte Datenübertragungsleitung auf Wiederfunktionsfähigkeit zu überwachen.

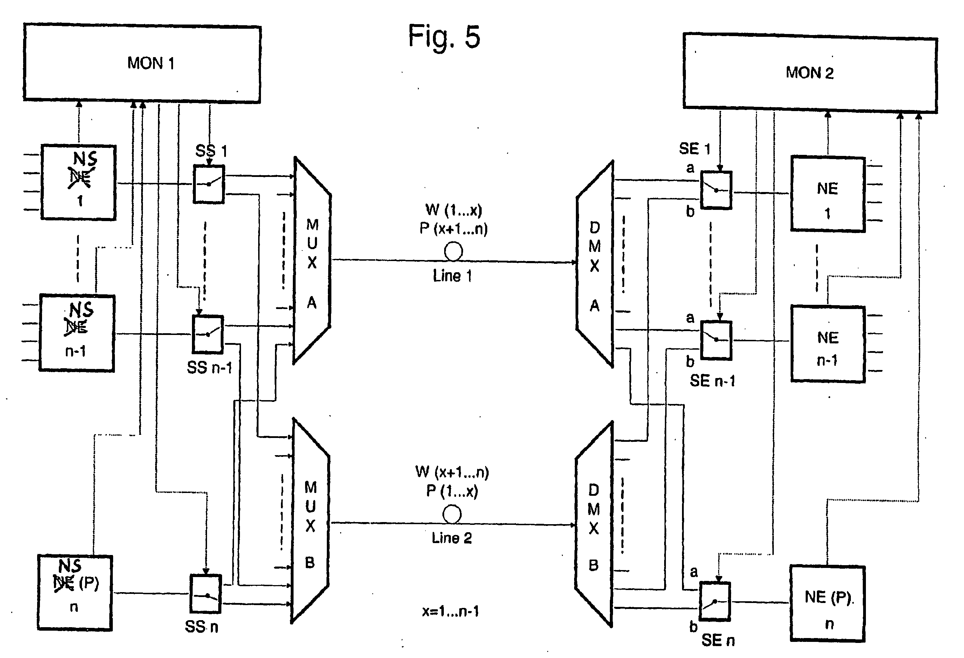

Eine weitere Schaltungsanordnung ist in der Figur 5 dargestellt. Auch hier sind in Senderichtung optische Schalter SS 1 ... SS n vorgesehen. Im Gegensatz zu der in Figur 4 dargestellten Anordnung ist aber kein eigener Kommunikationsweg K, sondern sender- und empfangsseitig je eine Monitorschaltung MON 1 und MON 2 erforderlich.

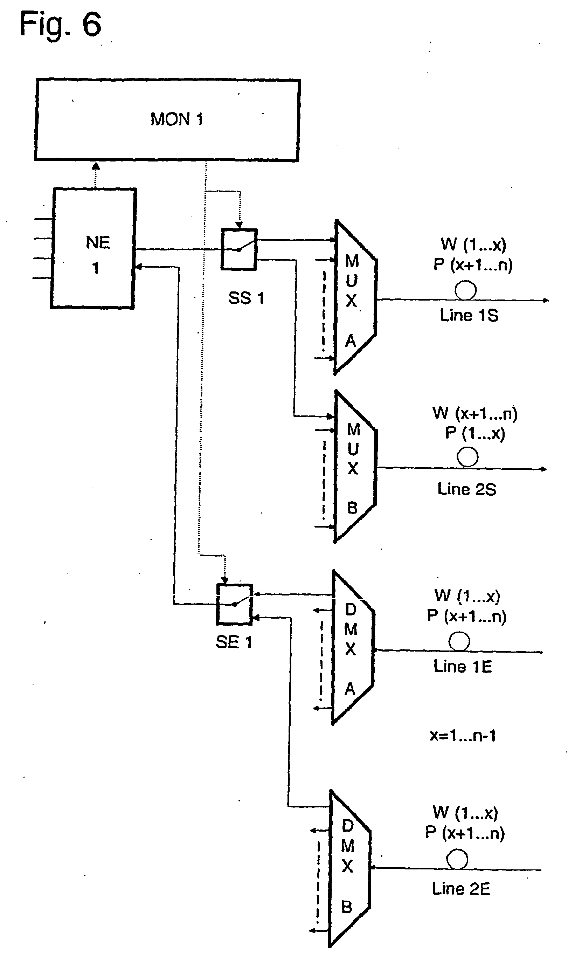

Das Prinzip dieser hier verwendeten Anordnung ist in der Figur 6 näher dargestellt, in der nun sowohl die Hin- als auch die Rückrichtung des Netzelements NE 1 gezeigt ist. Die Monitorschaltung MON 1 stellt die sendeseitigen und empfangsseitigen Schalter SS 1 und SE 1 gemeinsam in gleiche Richtung. Die Stellung des empfangsseitigen Schalters SE 1 dient dabei als Vorgabe, wobei der sendeseitige Schalter SS 1 dann in die gleiche Richtung gestellt wird.

Um die Funktionsweise näher zu erläutern, wird zunächst angenommen, daß in Senderichtung die Datenübertragungsleitung Line 1S und in Empfangsrichtung die Datenübertragungsleitung Line 1E als Working-Strecke betrieben werden. Fällt nun beispielsweise die Datenübertragungsleitung Line 2E aus, wird dies durch das Netzelement NE 1 erkannt und an die Monitorschaltung MON 1 gemeldet. Diese Monitorschaltung MON 1 stellt daraufhin den empfangsseitigen Schalter SE 1 auf die Datenübertragungsleitung Line 2E und den sendeseitigen Schalter SS 1 auf die Datenübertragungsleitung Line 2S.

Auf der Gegenstelle wird das Netzelement NE 1 daraufhin kein Signal auf der Datenübertragungsleitung Line 1S empfangen und deshalb ebenfalls auf die Datenübertragungsleitung Line 2S umschalten. Dadurch ist die automatische Umschaltung von der Datenübertragungsleitung Line 1 auf die Datenübertragungsleitung Line 2 vollzogen. Damit es hierbei nicht zu periodischen Umschaltvorgängen kommen kann, müssen die Schalter nach einer Umschaltung eine bestimmte Zeit in der neuen Stellung verharren, um der Gegenstelle eine Umschaltung zu ermöglichen.

Es ist darauf hinzuweisen, daß die in den Figuren jeweils empfängerseitig und senderseitig gezeigten Netzelemente in der Praxis grundsätzlich identische Bauteile sind, die jeweils sowohl einen Empfangspfad als auch einen Sendepfad aufweisen, wobei in den Figuren je Seite nur der entsprechende Pfad gezeigt ist und nur der Empfangspfad über eine RST- und MST-Funktion verfügt.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Insgesamt wird also durch die Erfindung eine einfache Schaltungsanordnung zur Leitungsprotektion einer optischen Datenübertragungsstrecke mit mindestens 2 auswählbaren optischen Datenübertragungsleitungen, welche jeweils Daten über n Datenkanäle übertragen können, angegeben, wobei die Umschaltung auf die jeweils gewünschte Datenübertragungsleitung erfindungsgemäß durch optische Schalter zwischen empfangsseitigen Netzelementen und Demultiplexern erfolgt. Hierdurch wird eine einfache und kostengünstige Leitungsprotection bei einer "Punkt zu Punkt"-Verbindung erreicht.

## Patentansprüche

1. Schaltungsanordnung zur Leitungsprotektion einer optischen Datenübertragungsstrecke, die zwischen einer Senderseite und einer Empfangsseite mindestens zwei auswählbare optische Datenübertragungsleitungen (Line1, Line2) aufweist, auf denen optische Signale über jeweils n Datenkanäle (W(1..n), P(1..n)) unterschiedlicher Frequenz übertragen werden, bei der senderseitig n Netzelemente (NS 1, ..., NS n) zur Umwandlung elektronischer Datensignale in optische Signale vorgesehen sind und den jeweiligen Netzelementen (NS 1, NS 2) pro optische Datenübertragungsleitung (Line1, Line2) je ein Multiplexer (MUX A, MUX B) nachgeschaltet ist und bei der empfangsseitig optische Schalter (S 1, ... S n; ... SE 1, ... SE n) vorgesehen sind, den jeweiligen optischen Datenübertragungsleitungen (Line1, Line2) je ein Demultiplexer (DMX A, DMX B) zugeordnet ist, deren jeweils einem der n Datenkanäle zugeordnete Ausgänge über jeweils einem der eine optische Datenübertragungsleitung (Line1, Line2) durchschaltenden optischen Schalter (S 1, ..., S n; SE 1, ..., SE n) an den jeweiligen Eingang von n empfangsseitigen Netzelementen (NE 1, ..., NE n) zur optisch/elektrischen Umwandlung geführt sind,
**dadurch gekennzeichnet, dass** die Schaltungsanordnung Überwachungseinrichtungen umfasst, dass jeweils eines der über einen der optischen Schalter (S 1, ... S n; SE 1, ..., SE n) durchgeschalteten Signale nach optisch/elektrischer Umwandlung in den empfangsseitigen Netzelementen (NE 1,..., NE n) einer der diesem Netzelement zugeordneten Überwachungseinrichtungen zur Ermittlung von Qualitäts- bzw. Leistungswerten der optischen Datenübertragungsleitungen (Line1, Line2)zugeführt ist, und
dass anhand der ermittelten Qualitäts- bzw. Leistungswerte eine Steuerung bzw. Umschaltung jedes optischen Schalters auf die jeweils qualitativ bessere optische Datenübertragungsleitung (Line1, Line2) erfolgt.

2. Schaltungsanordnung nach Anspruch 1,
**dadurch gekennzeichnet,**
**dass** Qualitäts- bzw. Leistungswerte der durchgeschalteten Signale an Eingänge mindestens einer allen Netzelementen gemeinsamen Monitorschaltung (MON) geführt sind, deren daraus abgeleitete Ausgangssignale mit den optischen Schaltern (S 1, ..., S n, SE 1, ..., SE n) verbunden sind.

3. Schaltungsanordnung gemäß Anspruch 1 oder 2,
**dadurch gekennzeichnet,**
**dass** mindestens eine Monitorschaltung (MON) zur gleichzeitigen Umschaltung aller optischen Schalter (S 1, ..., S n, SE 1, ..., SE n) vorgesehen ist.

4. Schaltungsanordnung gemäß einem der voranstehenden Ansprüche,
**dadurch gekennzeichnet,**
**dass** zur Überwachung der Qualität der Datenübertragung in den empfangsseitigen Netzelementen (NE 1 ... NE n) RST-Funktionen (RST=Regenerator Section Termination) vorgesehen sind.

5. Schaltungsanordnung gemäß einem der voranstehenden Ansprüche,
**dadurch gekennzeichnet,**
**dass** Mittel zur Kontrolle eines Rahmensynchronismus und/oder Ermittlung der Bitfehlerrate je optische Datenübertragungsleitung (Line 1, Line 2) oder Datenübertragungskanal vorgesehen sind.

6. Schaltungsanordnung gemäß einem der voranstehenden Ansprüche,
**dadurch gekennzeichnet,**
**dass** mindestens eine sendeseitige und/oder empfangseitige Monitorschaltung (MON, MON 1, MON 2) vorgesehen ist, welche die sendeseitige und/oder empfangseitige Umschaltung der Übertragung auf die jeweils bessere optische Datenübertragungsleitung (Line 1, Line 2) vornimmt, falls die Qualität einer optischen Datenübertragungsleitung (Line 1, Line 2) ein bestimmtes Maß unterschreitet.

7. Schaltungsanordnung gemäß einem der voranstehenden Ansprüche,
**dadurch gekennzeichnet,**
**dass** wenigstens ein Netzelement zur Überwachung einer ausgefallenen optischen Datenübertragungsleitung (Line 1, Line 2) vorgesehen ist.

8. Schaltungsanordnung gemäß einem der voranstehenden Ansprüche,
**dadurch gekennzeichnet,**
**dass** sende- und empfangsseitig je n-k Netzelemente (NS 1 ... NS (n-k), NE 1 ... NE (n-k)) für den Betrieb und k Netzelemente (NS (n-k+1) ... NS n, NE (n-k+1) ... NE n) zur Überwachung ausgefallener Datenübertragungskanäle vorgesehen sind.

9. Schaltungsanordnung gemäß einem der voranstehenden Ansprüche,
**dadurch gekennzeichnet,**
**dass** zur senderseitigen Verteilung der Datensignale optische Splitter (Sp 1 ... Sp n) vorgesehen sind, welche die Datensignale auf parallele optische Datenübertragungsleitungen (Line 1, Line 2) aufsplitten.

10. Schaltungsanordnung gemäß einem der voranstehenden Ansprüche,
**dadurch gekennzeichnet,**
**dass** zur senderseitigen Verteilung der Datensignale optische Schalter (SS 1 ... SSn) vorgesehen sind, welche entsprechend der Qualitätssituation der optischen Datenübertragungsleitungen (Line 1, Line 2) gesteuert werden.

11. Schaltungsanordnung gemäß dem Anspruch 10,
**dadurch gekennzeichnet,**
**dass** zur Steuerung der senderseitigen optischen Schalter (SS 1 ... SS n) ein zusätzlicher Kommunikationsweg (K) zwischen der Empfänger- und der Senderseite vorgesehen ist.

12. Schaltungsanordnung gemäß Anspruch 10 oder 11,
**dadurch gekennzeichnet,**
**dass** die senderseitigen optischen Schalter (SS 1 ... SSn) derart angesteuert sind, daß die empfangsseitige Stellung der Schalter (SE 1 ... SE n) gespiegelt wird.

13. Schaltungsanordnung gemäß einem der voranstehenden Ansprüche,
**dadurch gekennzeichnet,**
**dass** die optischen Datenübertragungsleitungen (Line 1, Line 2) als Glasfaser ausgebildet sind

14. Schaltungsanordnung gemäß einem der voranstehenden Ansprüche,
**dadurch gekennzeichnet,**
**dass** mindestens zwei Datenübertragungsstrecken auf getrennten Wegen vorgesehen sind.

## Claims

1. Circuit arrangement for line protection of an optical data transmission link that has at least two selectable optical data transmission lines (Line 1, Line 2) between a transmitter side and receiver side, on which optical signals are transmitted in each case via n data channels (W(1..n), P(1..n)) of a different frequency, with n network elements (NS 1 .. NS n) being provided at the transmitter side to convert electronic data signals to optical signals and a multiplexer (MUX A, MUX B) being connected in each case after the relevant network elements (NS 1, NS 2) for each optical data transmission line (Line 1, Line 2) and with optical switches (S 1 ..., S n; SE 1 ..., SE n) being provided and a demultiplexer (DMX A, DMX B), being assigned in each case to the particular optical data transmission lines (Line 1, Line 2) on the receiver side, and with whose outputs assigned each to one of the n data channels being applied via one of the optical switches (S 1 ..., S n; SE 1 ..., SE n), that in each case switches an optical data transmission line (Line 1, Line 2), to the relevant input of n receiver side network elements (NE 1 ... NE n) for optical/electronic conversion,
**characterised in that**
the circuit arrangement comprises monitoring devices such that one of the signals switched via one of the optical switches (S 1, ..., Sn; SE 1, ..., SE n), in each case is, after optical/electrical conversion in the receiver side network elements (NE 1, ..., NE n), applied to one of the monitoring devices assigned to this network element, for determination of quality or power values of the optical data transmission lines (Line 1, Line 2), and
using the quality or power values determined, a control or switching of the optical switch to particular optical data transmission line with the better quality (Line1, Line2) takes place.

2. Circuit arrangement in accordance with claim 1,
**characterised in that**
quality or performance values of the switched signals are applied to the inputs of at least one monitoring circuit (MON) common to all network elements with the output signals derived therefrom being connected to the optical switches (S 1, ..., S n; SE 1, ..., SE n).

3. Circuit arrangement in accordance with claim 1 or 2,
**characterised in that**
at least one monitoring circuit (MON) is used for the simultaneous switching of all optical switches (S 1, ..., S n, SE 1, ..., SE n).

4. Circuit arrangement in accordance with one of the preceding claims,
**characterised in that**
RST (Regenerator Section Termination) functions are provided in the receiver side network elements (NE 1 ... NE n) for monitoring the quality of the data transmission.

5. Circuit arrangement in accordance with one of the preceding claims,
**characterised in that**
means to check a frame synchronisation and/or determine the bit error rate are provided for each optical data transmission line (Line 1, Line 2) or data transmission channel.

6. Circuit arrangement in accordance with one of the preceding claims,
**characterised in that**
at least one transmitter side and/or one receiver side monitor circuit (MON, MON 1, MON 2) is provided, that switches the transmission at the transmitter and/or receiver side to the better optical data transmission line (Line 1, Line 2) in each case if the quality of an optical data transmission line (Line 1, Line 2) falls below a certain value.

7. Circuit arrangement in accordance with one of the preceding claims,
**characterised in that**
at least one network element is provided for monitoring a failed optical data transmission line (Line 1, Line 2).

8. Circuit arrangement in accordance with one of the preceding claims,
**characterised in that**,
n-k network elements (NS 1 ... NS (n-k), NE 1 ... NE (n-k)) for operation and k network elements (NS (n-k+1) ... NS n, NE (n-k+1) ... NE n) are each provided at the transmitter and receiver side for monitoring failed data transmission channels.

9. Circuit arrangement in accordance with one of the preceding claims,
**characterised in that**
optical splitters (Sp 1 ... Sp n) that split the data signals on parallel data transmission lines (Line 1, Line 2) are provided for distribution of the data signals at the transmitter side.

10. Circuit arrangement in accordance with one of the preceding claims,
**characterised in that**
optical switches (SS 1 ... SS n) that are controlled corresponding to the quality situation of the optical data transmission lines (line 1, Line 2) are provided for distribution of the data signals at the transmitter side.

11. Circuit arrangement in accordance with claim 10,
**characterised in that**
an additional communication path (K) is provided between the receiver and transmitter side for control of the optical switches (SS 1 ... SS n) at the transmitter side.

12. Circuit arrangement in accordance with claim 10 or 11,
**characterised in that**
the transmitter side optical switches (SS 1 ... SS n) are controlled in such a way that they mirror the position of switches (SE 1 ... SE n) at the receiver side.

13. Circuit arrangement in accordance with one of the preceding claims,
**characterised in that** the data transmission lines (Line 1, Line2) are formed as glass fibre.

14. Circuit arrangement in accordance with one of the preceding claims,
**characterised in that**
at least two data transmission lines are provided on separate paths.

## Revendications

1. Circuit de protection de ligne d'une section optique de transmission de données qui a, entre un côté émetteur et un côté récepteur, au moins deux lignes (Line1, Line2) de transmission optique de données qui peuvent être sélectionnées et sur lesquelles des signaux optiques sont transmis par, respectivement, n canaux (W (1..n), P (1..n)) de données de fréquences différentes, dans lequel du côté émetteur il est prévu n éléments (NS 1, ..., NS n) de réseau pour la transformation de signaux de données électroniques en des signaux optiques et il est monté en aval des éléments (NS 1, NS 2) respectifs de réseau par ligne (Line1, Line2) de transmission de données optiques, respectivement un multiplexeur (MUX A, MUX B) et dans lequel, du côté réception, il est prévu des commutateurs (S1, ..., Sn ; SE 1, ..., SE n) optiques, un démultiplexeur (DMX A, DMX B) étant associé respectivement aux lignes (Line1, Line 2) de transmission de données optiques, multiplexeur dont les sorties associées respectivement à l'un des n canaux de données vont par, respectivement, un commutateur (S1, ..., Sn ; SE 1, ..., SE n) optique mettant en communication une ligne (Line1, Line 2) de transmission optique de données à l'entrée respective de n éléments (NE 1, ..., NE n) de réseau du côté réception pour la conversion optique/électrique,
**caractérisé en ce que** le circuit comporte des dispositifs de contrôle, **en ce que**, respectivement, l'un des signaux transmis par l'un des commutateurs (S1, ..., Sn ; SE 1, ..., SE n) optiques après conversion optique/électrique, est envoyé dans les éléments (NE 1, ..., NE n) de réseau côté réception d'un des dispositifs de contrôle associés à cet élément de réseau pour la détermination de valeurs de qualité ou de puissance des lignes (Line1, Line 2) de transmission optique de données et **en ce que**, au moyen des valeurs de qualité et de puissance déterminées il s'effectue une commande ou une commutation de chaque commutateur optique sur la ligne (Line1, Line2) de transmission de données optiques, respectivement la meilleure qualitativement.

2. Circuit suivant la revendication 1,
**caractérisé**
**en ce que** des valeurs de qualité ou de puissance des signaux transmis sont envoyées aux entrées d'au moins un circuit (MON) de moniteur commun à tous les éléments de réseau, dont les signaux de sortie qui en proviennent sont reliés aux commutateurs (S1, ..., Sn ; SE 1, ..., SE n) optiques.

3. Circuit suivant la revendication 1 ou 2,
**caractérisé**
**en ce qu'**au moins un circuit (MON) de moniteur est prévu pour commuter simultanément tous les commutateurs (S1, ..., Sn ; SE 1, ..., SE n) optiques.

4. Circuit suivant l'une des revendications précédentes,
**caractérisé**
**en ce que** pour contrôler la qualité de la transmission de données, il est prévu dans les éléments (NE 1, ..., NE n) de réseau côté réception des fonctions RST (RST = Regenerator Section Termination).

5. Circuit suivant l'une des revendications précédentes,
**caractérisé**
**en ce qu'**il est prévu des moyens de contrôle d'un synchronisme de trame et/ou de détermination de taux d'erreur de bit par ligne (Line1, Line2) de transmission de données optiques ou par canal de transmission de données.

6. Circuit suivant l'une des revendications précédentes,
**caractérisé**
**en ce qu'**il est prévu au moins un circuit (MON, MON 1, MON 2) de moniteur du côté de l'émission et/ou du côté de la réception, circuit qui effectue la commutation côté émission et/ou côté réception de la transmission sur la ligne (Line1, Line2) de transmission de données optiques respectivement la meilleure dans le cas où la qualité des lignes (Line1, Line2) de transmission de données optiques devient inférieure à une valeur déterminée.

7. Circuit suivant l'une des revendications précédentes,
**caractérisé**
**en ce qu'**il est prévu au moins un élément de réseau pour contrôler une ligne (Line1, Line2) de transmission de données optiques défaillante.

8. Circuit suivant l'une des revendications précédentes,
**caractérisé**
**en ce qu'**il est prévu côté émission et côté réception, respectivement n-k éléments (NS 1 ... NS (n-k), NE 1 ... NE (n-k)) de réseau pour le fonctionnement et k éléments (NS (n-k+1) ... NS n, NE (n-k+1) ... NE n) de réseau pour le contrôle de canaux de transmission de données défaillant.

9. Circuit suivant l'une des revendications précédentes,
**caractérisé**
**en ce que** pour répartir côté émission les signaux de données il est prévu des séparateurs (Sp 1 ... Sp n) optiques qui séparent les signaux de données sur des lignes (Line1, Line2) de transmission de données optiques parallèles.

10. Circuit suivant l'une des revendications précédentes,
**caractérisé**
**en ce que** pour la répartition côté émission des signaux de données il est prévu des commutateurs (SS 1 ... SSn) optiques qui sont commandés en fonction de la situation de qualité des lignes (Line1, Line2) de transmission de données optiques.

11. Circuit suivant la revendication 10,
**caractérisé**
**en ce que** pour la commande des commutateurs (SS 1 ... SS n) optiques côté émission il est prévu un trajet (K) supplémentaire de communication entre le côté du récepteur et le côté de l'émetteur.

12. Circuit suivant la revendication 10 ou 11,
**caractérisé**
**en ce que** les commutateurs (SS 1 ... SS n) optiques côté émission sont commandés de façon à refléter la position côté émission du commutateur (SE 1 ... SE n) .

13. Circuit suivant l'une des revendications précédentes,
**caractérisé**
**en ce que** les lignes (Line1, Line2) de transmission de données optiques sont constituées sous la forme de fibres optiques.

14. Circuit suivant l'une des revendications précédentes,
**caractérisé**
**en ce qu'**il est prévu au moins deux sections de transmission de données sur des voies séparées.
